(19) Europäisches Patentamt
European Patent Office
Office européen des brevets

(11) **EP 4 273 762 A1**

(12) **EUROPEAN PATENT APPLICATION**

(43) Date of publication:
**08.11.2023 Bulletin 2023/45**

(21) Application number: **22305684.7**

(22) Date of filing: **06.05.2022**

(51) International Patent Classification (IPC):
**G06N 10/80** *(2022.01)*

(52) Cooperative Patent Classification (CPC):
**G06N 10/80**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Centre national de la recherche scientifique 75016 Paris (FR)**

• **Université de Strasbourg 67000 Strasbourg (FR)**

(72) Inventor: **WHITLOCK, Shannon 67000 STRASBOURG (FR)**

(74) Representative: **Lavoix 2, place d'Estienne d'Orves 75441 Paris Cedex 09 (FR)**

(54) **QUANTUM EMULATOR**

(57) The present invention relates to a quantum emulator (10) for emulating the response of a quantum device to commands received by the quantum device, the quantum device comprising a system of quantum objects and a set of hardware elements for manipulating the quantum objects following the reception of commands by the quantum device, the hardware elements having imperfections impacting the manipulations, the quantum emulator (10) being configured to receive an input signal corresponding to a command intended to be sent to the quantum device in order to carry out a manipulation, and to compute an output signal corresponding to an emulated response of the quantum device, the quantum emulator (10) comprising a hardware module (32) configured to represent transfer functions taking into account an imperfection introduced by an hardware element.

FIG.1

**Description**

TECHNICAL FIELD OF THE INVENTION

The present invention concerns a quantum emulator. The present invention also concerns an associated method for emulating the response of a quantum device to commands received by the quantum device.

BACKGROUND OF THE INVENTION

Today, there is a large push to develop new technologies, which exploit the principles of quantum mechanics, such as quantum computers, quantum sensors or quantum communication networks. Such quantum devices have the potential to significantly improve capabilities beyond what can be achieved by classical devices. However, quantum devices are inherently fragile, which currently limits their performance.

In order to enable the functioning of such devices in a long term, there is a demand for developing other elements of the quantum chain, such as electronic and optical control systems, quantum software, quantum protocols and quantum algorithms.

The development of such elements requires access to quantum devices as a training, testing and development tool. As few people have low-level access to actual quantum devices, classical simulators of quantum devices have been developed. We define a quantum simulator as a software that simulates quantum states and their evolution on classical computers.

However, such quantum simulators are largely based on ideal models of the quantum devices, and their simulations can be far different from the results that would have been obtained with a real quantum device. Hence, the development of elements of the quantum chain remains challenging.

SUMMARY OF THE INVENTION

There is therefore a need for a means enabling to test and train elements of the quantum chain, such as electronic and optical control systems, quantum software, quantum protocols and quantum algorithms, in a more realistic manner.

To this end, the invention relates to a quantum emulator for emulating the response of a quantum device to commands received by the quantum device, the quantum device comprising a system of quantum objects and a set of hardware elements for manipulating the quantum objects following the reception of commands by the quantum device, the hardware elements having imperfections impacting the manipulations, at least one imperfection inducing at least one effect among: losses, time delays, dispersion, time shift and distortion, the quantum emulator being configured to receive an input signal corresponding to a command intended to be sent to the quantum device in order to carry out a manipulation, and to compute an output signal corresponding to an emulated response of the quantum device, the quantum emulator having access to a memory storing:

- system data relative to characteristics of the system of quantum objects,
- hardware data relative to characteristics of the set of hardware elements,

the quantum emulator comprising:

- a hardware module configured to represent transfer functions describing the set of hardware elements as a function of the hardware data, at least one transfer function taking into account an imperfection introduced by an hardware element and inducing at least one effect among: losses, time delays, dispersion, timeshift and distortion, the input of the hardware module being the input signal and the output being an intermediary signal resulting from the application of the transfer functions to the input signal,
- a system module configured to generate a time-dependent model of the Hamiltonian of the system of quantum objects, called Hamiltonian model, as a function of the system data and of the intermediary signal, and
- a simulator module configured to compute the output signal as a function of the Hamiltonian model.

The quantum emulator may comprise one or more of the following features considered alone or in any combination that is technically possible:

- at least a piece of hardware data is obtained from measurements performed on some hardware elements of the quantum device ;
- the transfer functions of the hardware module are combined to form a functional representation of the hardware elements and their connections ;

- the Hamiltonian model comprises a time-dependent equation depending on a set of time-dependent coefficients , each time-dependent coefficient ($c_k(t)$) being relative to an operator, each time dependent coefficient ($c_k(t)$) being obtained as a function of the intermediary signal;
- the intermediary signal is composed of intermediary subsignals, each time-dependent coefficient being given by the following relation:

$$c_k(t) = \sum_j \chi_{jk} y_j(t)$$

Where:

- $c_k(t)$ is the time-dependent coefficient for operator k,
- $y_j(t)$ is the intermediary subsignal j, and
- $\chi_{jk}$ is a tensor relative to the system of quantum objects for the intermediary subsignal $y_j(t)$ and the operator k;

- the time-dependent equation of the Hamiltonian model is given by the following relation:

$$H(t) = \sum_k c_k(t) H_k$$

Where:

- $c_k(t)$ is the time-dependent coefficient for operator k,
- $H_k$ is an operator k relative to the coefficient $c_k(t)$, and
- $H(t)$ is the time-dependent evolution of the Hamiltonian at the output of the system module;

- the characteristics of the set of hardware elements stored in the memory are relative to transfer function and/or to cut-off values describing each hardware element;
- at least a characteristic of the system of quantum objects stored in the memory is chosen among transition frequencies, transition matrix elements and interaction strengths;
- the input signal comprises at least one time-dependent waveform;
- the input signal is an analog signal, the quantum emulator comprising an analog to digital converter able to convert the input signal into a numerical signal;
- the simulator module is based on a numerical solver for first order ordinary differential equations, such as an explicit Runge-Kutta method;
- the commands are generated using a control element, the emulated response enabling to optimize the control element and input signals;
- the optimization comprises:

  - the modification of the control element as a function of the emulated response, or
  - the modification of the input signal(s) or of quantum protocol(s) enabling to obtain a desired output signal, or
  - the validation of the control element as a function of the emulated response and the implementation of the control element on a quantum device.

The invention also relates to a method for emulating the response of a quantum device to commands received by the quantum device, the quantum device comprising a system of quantum objects and a set of hardware elements for manipulating the quantum objects following the reception of commands by the quantum device, the hardware elements having imperfections impacting the manipulations, at least one imperfection inducing at least one effect among: losses, time delays, dispersion, time shift and distortion, the method being implemented by a quantum emulator as previously described and comprising the following steps:

- receiving an input signal corresponding to a signal intended to be sent to the quantum device in order to carry out a manipulation, and

- determining an output signal resulting from the input signal.

In an embodiment, the method also comprises the steps of:

- generating the input signal using a control element, and
- optimizing the control element as a function of the determined output signal resulting from the input signal.

BRIEF DESCRIPTION OF THE DRAWINGS

The invention will be easier to understand in view of the following description, provided solely as an example and with reference to the appended drawings in which:

- Figure 1 is a schematic representation of an example of a quantum emulator, and
- Figure 2 is a flowchart of an example of implementation of a method for emulating the response of a quantum device to commands received by the quantum device using the quantum emulator of figure 1.

DETAILED DESCRIPTION OF SOME EMBODIMENTS

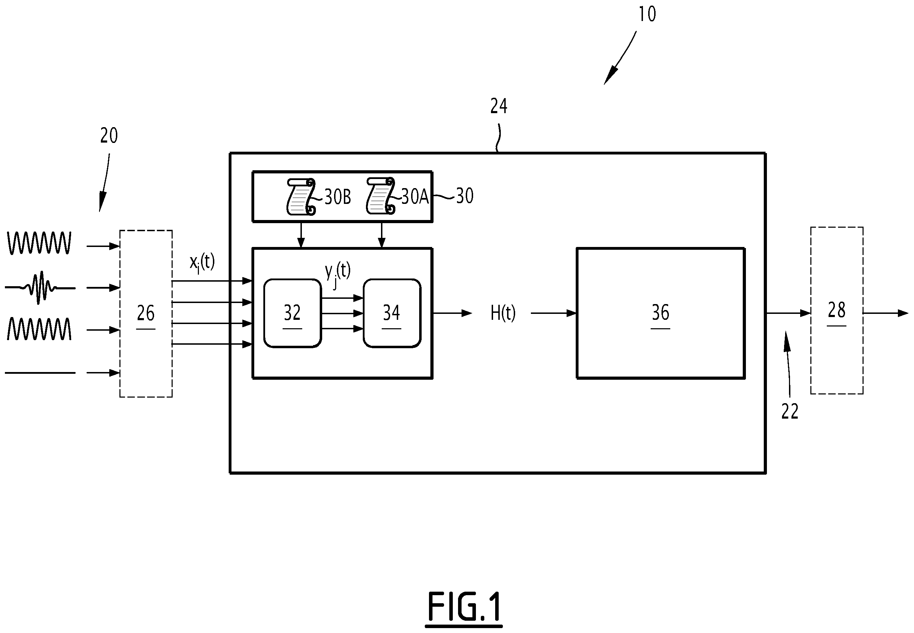

An example of a quantum emulator 10 is illustrated on figure 1.

The quantum emulator 10 is configured to emulate the response of a quantum device 12 to commands received by the quantum device 12. In particular, the commands induce manipulations allowing changing the quantum states of the quantum device 12.

The quantum device 12 is a device based on the principles of quantum mechanics.

The quantum device 12 is, for example, a quantum computer (analog or digital quantum computer), a quantum sensor, a quantum communication network.

The quantum device 12 comprises a system of quantum objects and a set of hardware elements for manipulating the quantum objects following the reception of commands by the quantum device 12. As explained above, the commands allow changing the quantum states of the quantum device 12.

The quantum objects are objects whose dynamics cannot be described using classical physics, but instead can only accurately be described using the principles of quantum mechanics.

The quantum objects are, for example, photons (trapped in cavities or propagating in vacuum or in optical fibers), hot or cold atoms, molecules, trapped ions, electrons, nuclear spins, quantum dots or superconducting qubits.

The hardware elements are material enabling the manipulation of the quantum objects.

The hardware elements are, for example, lasers, waveform generators, acousto-optical modulators, electro-optical modulators, optical elements, optical fibers, cables, amplifiers, electronic filters or mixers.

The hardware elements have imperfections impacting the manipulations. For example, at least one imperfection induces at least one effect among: losses, time delays, dispersion, time shift and distortion.

In an example of implementation, illustrated on figure 1, the quantum emulator 10 is a physical device. Preferably, the quantum emulator 10 is a standalone device, which is configured to be connected to a quantum hardware controller and/or quantum software components.

As illustrated on figure 1, the quantum emulator 10 comprises at least one input 20, at least one output 22 and a calculator 24. Optionally, the quantum emulator 10 also comprises an analog to digital converter 26 and an output sampling module 28 (shown in dotted lines on figure 1).

Each input 20 is able to receive an input signal corresponding to a command intended to be sent to the quantum device 12 in order to carry out a manipulation.

Preferably, the command is generated using at least one control element. The control element is, for example, a quantum control hardware or a software protocol. More precisely, the control element is, for example, an electronic signal or a software instruction used to implement a quantum protocol. Preferably, the input signal comprises at least one time-dependent waveform.

Preferably, the input signal is an analog electronic signal, which is converted into numerical waveform data by the analog to digital converter 26. In a variant, the input signal is numerical waveform data.

Each output 22 is able to output an output signal corresponding to an emulated response of the quantum device 12.

Preferably, when the command is generated using a control element, the emulated response enables to optimize the control element and the input signal(s). The optimization comprises for example at least one of the following actions:

- the modification of the control element as a function of the emulated response, or
- the modification of the input signal(s) or of quantum protocol(s) enabling to obtain a desired output signal, or

- the validation of the control element as a function of the emulated response and the implementation of the control element on a quantum device 12.

In an example, the optimization comprises changing the signals provided to the control electronics to compensate for the imperfections. In another example, the optimization comprises changing the electronic filters of the control electronics.

The calculator 24 is for example a computer, such as a digital or classical computer.

As illustrated on figure 1, the calculator 24 comprises a memory 30, a hardware module 32, a system module 34 and a simulator module 36.

The hardware module 32, the system module 34 and the simulator module 36 are for example each implemented as a software. In an example of implementation, the calculator 24 comprises a data processing unit and is in interaction with a computer program product comprising a computer readable medium, having thereon a computer program comprising program instructions relative to the hardware module 32, the system module 34 and the simulator module 36. The computer program is loadable into the data-processing unit of the calculator 24 and causes execution of the quantum emulator 10, (ie of a method for emulating the response of a quantum device 12 to commands received by the quantum device 12), when the computer program is run by the data-processing unit.

The memory 30 is configured to store at least the following data:

- system data 30A which are data relative to characteristics of the system of quantum objects, and
- hardware data 30B which are data relative to characteristics of the set of hardware elements.

Preferably, at least a characteristic of the system of quantum objects stored in the memory 30 is chosen among transition frequencies, transition matrix elements and interaction strengths.

Preferably, at least a piece of hardware data is obtained from measurements performed on some hardware elements of the quantum device 12. The measurements are, for example, performed using an oscilloscope or spectrum analyzer.

Preferably, the characteristics of the set of hardware elements stored in the memory 30 are relative to transfer function and/or to cut-off values describing each hardware element.

The hardware module 32 is configured to generate transfer functions describing the set of hardware elements as a function of the hardware data. At least one transfer function takes into account an imperfection introduced by an hardware element and induces at least one effect among: losses, time delays, dispersion, timeshift and distortion. Preferably, each transfer function takes into account an imperfection introduced by an hardware element.

The input of the hardware module 32 is the input signal and the output is an intermediary signal resulting from the application of the transfer functions to the input signal. The intermediary signal is for example composed of intermediary subsignals $y_j(t)$.

Preferably, the transfer functions generated by the hardware module 32 are combined to form a functional representation of the hardware elements and their connections.

The system module 34 is configured to generate a time-dependent model of the Hamiltonian of the system of quantum objects, called Hamiltonian model, as a function of the system data and of the intermediary signal.

In an embodiment, the Hamiltonian model comprises a time-dependent equation depending on a set of time-dependent coefficients $c_k(t)$. Each time-dependent coefficient $c_k(t)$ is relative to an operator. Each time dependent coefficient $c_k(t)$ is obtained as a function of the intermediary signal.

Preferably, each time-dependent coefficient $c_k(t)$ is given by the following relation:

$$c_k(t) = \sum_j \chi_{jk} y_j(t) \qquad (1)$$

Where:

- $c_k(t)$ is the time-dependent coefficient for operator k,
- $y_j(t)$ is the intermediary subsignal j, and
- $\chi_{jk}$ is a tensor relative to the system of quantum objects for the intermediary subsignal $y_j(t)$ and the operator k.

Preferably, the time-dependent equation of the Hamiltonian model is given by the following relation:

$$H(t) = \sum_k c_k(t) H_k \qquad (2)$$

Where:

- $c_k(t)$ is the time-dependent coefficient for operator k,
- $H_k$ is an operator k relative to the coefficient $c_k(t)$, and
- $H(t)$ is the time-dependent evolution of the Hamiltonian at the output of the system module 34.

The simulator module 36 is configured to compute the output signal as a function of the Hamiltonian model.

Preferably, the simulator module 36 is based on a numerical solver for first order ordinary differential equations, such as an explicit Runge-Kutta method.

In a variant of implementation, the quantum emulator 10 is a computer program product comprising the hardware module 32, the system module 32 and the simulator module 36. The computer program product is loadable into a data processing unit of a calculator to cause execution of the hardware module 32, the system module 32 and the simulator module 36 so as to compute the output signal, following the reception of the input signal. In this variant, the system data and hardware data are accessible during execution of such modules.

In an example, the computer program product is memorized on an information medium. The information medium is for example a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

In another example, the computer program product is stored on a cloud accessible through a server.

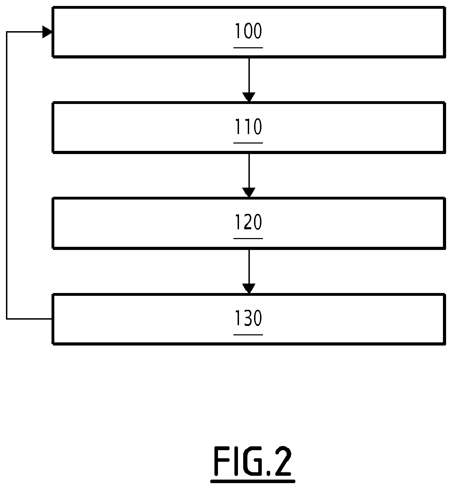

Operation of the quantum simulator will now be described with reference to figure 2, which diagrammatically illustrates an example of implementation of a method for emulating the response of a quantum device 12 to commands received by the quantum device 12.

In an example of implementation, the method comprises a step 100 of generating the input signal using a control element. As previously described, the control element is, for example, an electronic signal or a software instruction used to implement a quantum protocol.

The method comprises a step 110 of receiving, by the quantum emulator 10 (at the input 20), of an input signal corresponding to a signal, intended to be sent to the quantum device 12 in order to carry out a manipulation on the system of quantum objects, and which has been generated using the control element in the previous example.

The method comprises a step 120 of determining, by the calculator 24, an output signal resulting from the input signal.

In particular, the determining step 120 comprises the determination of an intermediary signal by the hardware module 32 as a function of the input signal and the hardware data stored in the memory 30 of the calculator 24.

The determining step 120 also comprises the determination of an Hamiltonian model by the system module 34 as a function of the intermediary signal and of the system data stored in the memory 30 of the calculator 24.

The determining step 120 comprises the determination of an output signal by a simulator module 36 as a function of the Hamitonian model. The output signal is returned to the user (at the output 22). Optionally, the output signal 22 is sampled by the sampling module 28. Optionally, a representation of the output signal is displayed on a display, such as a screen.

Optionally, the method comprises a step 130 of optimizing the control element as a function of the determined output signal resulting from the input signal.

The optimization step 130 comprises, for example, one of the following actions:

- the modification of the control element as a function of the emulated response (for example the modification of an hardware component of the control element or of the settings of the control element, or
- the modification of the input signal (for example to optimize the performance of a quantum protocol accounting for hardware imperfections), or
- the validation of the control element as a function of the emulated response and the implementation of the control element on a quantum device 12.

Hence, the quantum emulator 10 enables to duplicate the hardware characteristics and performance of a genuine quantum device 12, which enables the training, testing and development of quantum control hardware and software protocols. This enables to develop solutions which account for realistic constraints of actual hardware without specific expert knowledge or low-level access to quantum hardware.

Such a quantum emulator 10 performs two functions:

- It transforms the input signal (input waveforms) according to a predefined model (transfer functions) taking into account realistic (using the hardware data) physical characteristics of the quantum hardware to be emulated (electronic filters, mixers, acousto-optical devices).

- It simulates (system module 34 and simulation module) the evolution of the quantum system being emulated, taking into account preferably realistic details such as the multilevel structure of the quantum objects and noise processes, which can be preferably activated/deactivated by the user.

In a preferred embodiment, the input of the quantum emulator 10 are waveform signals. This enables to model the evolution of quantum states dependent on time-dependent control voltages. The simulations are therefore more realistic.

The person skilled in the art will understand that the embodiments and variants described above can be combined to form new embodiments provided that they are technically compatible.

**Claims**

1. A quantum emulator (10) for emulating the response of a quantum device (12) to commands received by the quantum device (12), the quantum device (12) comprising a system of quantum objects and a set of hardware elements for manipulating the quantum objects following the reception of commands by the quantum device (12), the hardware elements having imperfections impacting the manipulations, at least one imperfection inducing at least one effect among: losses, time delays, dispersion, time shift and distortion, the quantum emulator (10) being configured to receive an input signal corresponding to a command intended to be sent to the quantum device (12) in order to carry out a manipulation, and to compute an output signal corresponding to an emulated response of the quantum device (12), the quantum emulator (20) having access to a memory storing:

   - system data relative to characteristics of the system of quantum objects,
   - hardware data relative to characteristics of the set of hardware elements,

   the quantum emulator (10) comprising:

   - a hardware module (32) configured to represent transfer functions describing the set of hardware elements as a function of the hardware data, at least one transfer function taking into account an imperfection introduced by an hardware element and inducing at least one effect among: losses, time delays, dispersion, timeshift and distortion, the input of the hardware module (32) being the input signal and the output being an intermediary signal resulting from the application of the transfer functions to the input signal,
   - a system module (34) configured to generate a time-dependent model of the Hamiltonian of the system of quantum objects, called Hamiltonian model, as a function of the system data and of the intermediary signal, and
   - a simulator module (36) configured to compute the output signal as a function of the Hamiltonian model.

2. A quantum emulator (10) according to claim 1, wherein at least a piece of hardware data is obtained from measurements performed on some hardware elements of the quantum device (12).

3. A quantum emulator (10) according to claim 1 or 2, wherein the transfer functions of the hardware module (32) are combined to form a functional representation of the hardware elements and their connections.

4. A quantum emulator (10) according to any one of claims 1 to 3, wherein the Hamiltonian model comprises a time-dependent equation depending on a set of time-dependent coefficients , each time-dependent coefficient ($c_k(t)$) being relative to an operator, each time dependent coefficient ($c_k(t)$) being obtained as a function of the intermediary signal.

5. A quantum emulator (10) according to claim 4, wherein the intermediary signal is composed of intermediary subsignals , each time-dependent coefficient) being given by the following relation:

$$c_k(t) = \sum_j \chi_{jk} y_j(t)$$

Where:

   - $c_k(t)$ is the time-dependent coefficient for operator k,

- $y_j(t)$ is the intermediary subsignal j, and
- $\chi_{jk}$ is a tensor relative to the system of quantum objects for the intermediary subsignal $y_j(t)$ and the operator k.

6. A quantum emulator (10) according to claim 4 or 5, wherein the time-dependent equation of the Hamiltonian model is given by the following relation:

$$H(t) = \sum_k c_k(t) H_k$$

Where:

- $c_k(t)$ is the time-dependent coefficient for operator k,
- $H_k$ is an operator k relative to the coefficient $c_k(t)$, and
- $H(t)$ is the time-dependent evolution of the Hamiltonian at the output (22) of the system module (34).

7. A quantum emulator (10) according to any one of claims 1 to 6, wherein the characteristics of the set of hardware elements stored in the memory (30) are relative to transfer function and/or to cut-off values describing each hardware element.

8. A quantum emulator (10) according to any one of claims 1 to 7, wherein at least a characteristic of the system of quantum objects stored in the memory (30) is chosen among transition frequencies, transition matrix elements and interaction strengths.

9. A quantum emulator (10) according to any one of claims 1 to 8, wherein the input signal comprises at least one time-dependent waveform.

10. A quantum emulator (10) according to any one of claims 1 to 9, wherein the input signal is an analog signal, the quantum emulator (10) comprising an analog to digital converter (26) able to convert the input signal into a numerical signal.

11. A quantum emulator (10) according to any one of claims 1 to 10, wherein the simulator module (36) is based on a numerical solver for first order ordinary differential equations, such as an explicit Runge-Kutta method.

12. A quantum emulator (10) according to any one of claims 1 to 11, wherein the commands are generated using a control element, the emulated response enabling to optimize the control element and input signals.

13. A quantum emulator (10) according to claim 12, wherein the optimization comprises:

- the modification of the control element as a function of the emulated response, or
- the modification of the input signal(s) or of quantum protocol(s) enabling to obtain a desired output signal, or
- the validation of the control element as a function of the emulated response and the implementation of the control element on a quantum device (12).

14. A method for emulating the response of a quantum device (12) to commands received by the quantum device (12), the quantum device (12) comprising a system of quantum objects and a set of hardware elements for manipulating the quantum objects following the reception of commands by the quantum device (12), the hardware elements having imperfections impacting the manipulations, at least one imperfection inducing at least one effect among: losses, time delays, dispersion, time shift and distortion, the method being implemented by a quantum emulator (10) according to any one of claims 1 to 13 and comprising the following steps:

- receiving an input signal corresponding to a signal intended to be sent to the quantum device (12) in order to carry out a manipulation, and
- determining an output signal resulting from the input signal.

15. A method according to claim 14, wherein the method also comprises the steps of:

- generating the input signal using a control element, and
- optimizing the control element as a function of the determined output signal resulting from the input signal.

FIG.1

EP 4 273 762 A1

```
        ┌──────────────────────────────┐
   ┌───►│             100              │
   │    └──────────────────────────────┘
   │                   │
   │                   ▼
   │    ┌──────────────────────────────┐
   │    │             110              │
   │    └──────────────────────────────┘
   │                   │
   │                   ▼
   │    ┌──────────────────────────────┐
   │    │             120              │
   │    └──────────────────────────────┘
   │                   │
   │                   ▼
   │    ┌──────────────────────────────┐
   └────│             130              │
        └──────────────────────────────┘
```

## FIG.2

**Europäisches Patentamt**
**European Patent Office**
**Office européen des brevets**

# EUROPEAN SEARCH REPORT

**Application Number**

EP 22 30 5684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHAUDHARY H. ET AL: "A software simulator for noisy quantum circuits", INTERNATIONAL JOURNAL OF MODERN PHYSICS C., vol. 33, no. 08, 25 December 2021 (2021-12-25), XP055969484, GB ISSN: 0129-1831, DOI: 10.1142/S0129183122501030 * the whole document * | 1-15 | INV. G06N10/80 |
| A | GIAN GIACOMO GUERRESCHI ET AL: "Intel Quantum Simulator: A cloud-ready high-performance simulator of quantum circuits", ARXIV.ORG, CORNELL UNIVERSITY LIBRARY, 201 OLIN LIBRARY CORNELL UNIVERSITY ITHACA, NY 14853, 28 January 2020 (2020-01-28), XP081659230, * the whole document * | 1-15 | |
| A | JIAXIU HAN ET AL: "Experimental simulation of open quantum system dynamics via Trotterization", ARXIV.ORG, CORNELL UNIVERSITY LIBRARY, 201 OLIN LIBRARY CORNELL UNIVERSITY ITHACA, NY 14853, 5 August 2021 (2021-08-05), XP091029762, DOI: 10.1103/PHYSREVLETT.127.020504 * the whole document * | 1-15 | **TECHNICAL FIELDS SEARCHED (IPC)** G06N |

-/--

The present search report has been drawn up for all claims

| Place of search | Date of completion of the search | Examiner |
|---|---|---|
| The Hague | 17 October 2022 | Moro Pérez, Gonzalo |

Europäisches
Patentamt
European
Patent Office
Office européen
des brevets

# EUROPEAN SEARCH REPORT

**Application Number**

EP 22 30 5684

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PILCH JAKUB ET AL: "An FPGA-based real quantum computer emulator", JOURNAL OF COMPUTATIONAL ELECTRONICS, SPRINGER US, BOSTON, vol. 18, no. 1, 15 December 2018 (2018-12-15), pages 329-342, XP036744275, ISSN: 1569-8025, DOI: 10.1007/S10825-018-1287-5 [retrieved on 2018-12-15] * the whole document * ----- | 1-15 | |

**TECHNICAL FIELDS SEARCHED (IPC)**

The present search report has been drawn up for all claims

| Place of search | Date of completion of the search | Examiner |
|---|---|---|
| The Hague | 17 October 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)